# EUROPEAN PATENT SPECIFICATION

(11) **EP 3 124 800 B1**
(45) Date of publication and mention of the grant of the patent: **15.05.2019**
(21) Application number: 15179413.8
(22) Date of filing: 31.07.2015
(51) Int. Cl.: F16B 2/20, F16B 2/24, F16B 7/04, F16B 39/10, B62K 19/24

(54) **CLAMP DEVICE WITH RESILIENCE**
KLEMMENVORRICHTUNG MIT ELASTIZITÄT
DISPOSITIF DE SERRAGE AVEC RÉSILIENCE

(43) Date of publication of application: 01.02.2017
(73) Proprietor: Mobility Holdings, Limited, Hong Kong (HK)
(72) Inventor: LOESCH, Thomas, New Taipei City 241 (TW); UIMONEN, Joakim, Hong Kong (HK); LIN, Eric Yi Hung, New Taipei City 241 (TW)
(74) Representative: Altenburg, Bernardus Stephanus Franciscus

(56) References cited:
- WO-A1-2009/054345
- GB-A- 2 227 053
- JP-A- 2014 152 916
- US-A- 491 036
- US-A- 1 473 177
- US-A- 3 536 281
- US-A- 3 827 815
- US-A- 4 476 673

## Description

### BACKGROUND OF THE INVENTION

### Field of the Invention

The present invention relates to leaf springs and more particularly to a clamp device with resilience for use with a stem of a folding bicycle.

### Description of the Prior Art

Due to their portability, folding bicycles are in wide use. Regarding the structure of a conventional folding bicycle, a stem is fixed in place or disconnected by a connection device. For example, European Patent Application EP 2471701 A1 is directed to a folding device of a folding bicycle and discloses a connection device 40 thereof. During a folding bicycle manufacturing process, the step of connecting a first bar shaft 41 to a guide slot 433 of a rod 43 also entails coating the connection device 40 with a locking agent for preventing the connection device 40 from loosening.

However, in practice, the service life of the locking agent is never unlimited, because the connection device 40 of a bicycle gets loosened as a result of the vibration the bicycle in operation and repeated disassembly of the bicycle. Accordingly, the prior art still has room for improvement.

WO 2009/054345 discloses a fixing member (joint) to be fixed to two rod-like members includes at least two clamp members each having a clamp portion for clamping the rod-like member, which corresponding to a clamp device comprising a clamping portion, including a first clamping plate and a second clamping plate, and a fixing portion. Document JP2014152916 discloses a clamping device, on which the preamble of claim 1 is based.

### SUMMARY OF THE INVENTION

It is an objective of the present invention to provide a clamp device with resilience to solve the problem with the vibration and disconnection of a connection device (usually a slender bar) disposed in a folding structure of a stem of a folding bicycle.

In order to achieve the above and other objectives, the present invention provides a clamp device with resilience, for use in clamping a slender bar including a connection rod and a bar shaft, with the connection rod being a long polyhedron and including at least a polygonal vertex and at least a polygonal face and a thread portion. The clamp device with resilience comprises a clamping portion and a fixing portion. The clamping portion comprises: a first clamping plate; and a second clamping plate opposing the first clamping plate, wherein the second clamping plate and the first clamping plate together form a space for containing and clamping the connection rod. The fixing portion is connected to the clamping portion and adapted to receive the bar shaft. The fixing portion comprises a hole penetrable by the tread portion and a curved bent arm adapted to receive and fix the bar shaft. When the first clamping plate and the second clamping plate clamp the connection rod, and the connection rod is rotated to cause the first clamping plate and the second clamping plate to come into contact with the at least a polygonal vertex, such that the at least a polygonal vertex draws apart the first clamping plate and the second clamping plate, thereby causing the first clamping plate and the second clamping plate to move away from each other and allowing the connection rod to rotate by an angle, and the fixing portion is adapted to keep the bar shaft still.

According to a preferred embodiment of the present invention, the first clamping plate and the second clamping plate are each a resilient plate.

According to further preferred embodiment of the present invention, the resilient plate is a steel resilient plate or an iron resilient plate.

According to another preferred embodiment of the present invention, the first clamping plate and the second clamping plate are parallel to each other.

According to another preferred embodiment of the present invention, the clamping portion further comprises a top plate for pressing the connection rod to fix the connection rod in place.

According to a further preferred embodiment of the present invention, the first clamping plate and the second clamping plate each further comprise convolution portions corresponding in position to each other.

According to a still preferred an embodiment of the present invention, the convolution portions are serrated and have rounded corners.

### BRIEF DESCRIPTION OF THE DRAWINGS

FIG. 1 is a perspective view of a clamp device with resilience according to the present invention; and
FIG. 2 is a schematic view of operation of the clamp device with resilience according to the present invention.

### DETAILED DESCRIPTION OF THE EMBODIMENTS

The present invention is hereunder illustrated with preferred embodiments.

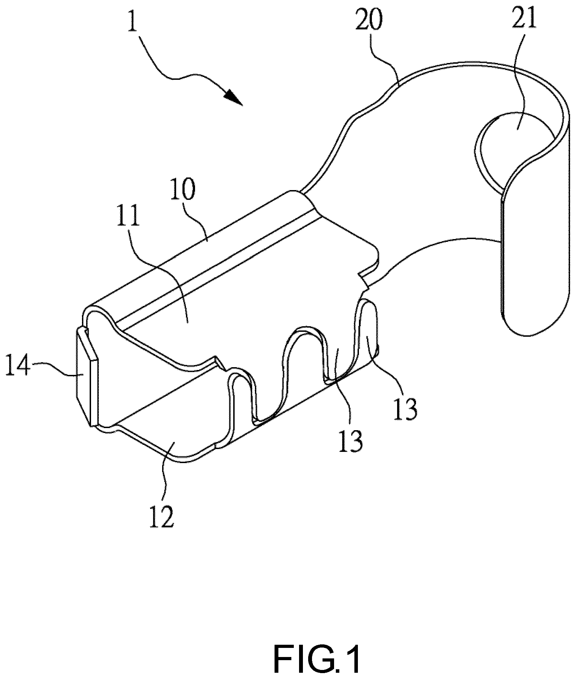

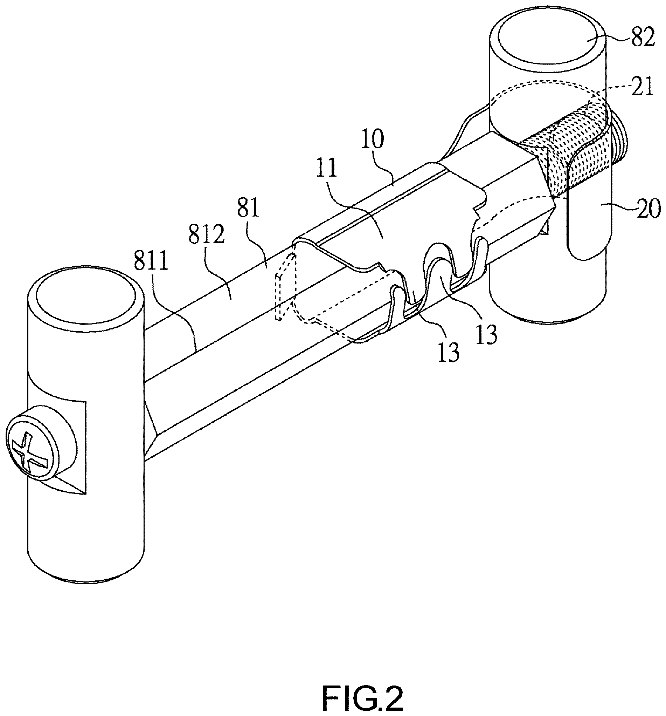

FIG. 1 is a perspective view of a clamp device 1 with resilience according to the present invention. FIG. 2 is a schematic view of operation of the clamp device 1 with resilience according to the present invention. Referring to FIG. 2, the clamp device 1 with resilience and a slender bar 80 are adapted to be coupled together. The slender bar 80 comprises a connection rod 81 and a bar shaft 82. In an embodiment of the present invention, the connection rod 81 is a hex bolt and comprises six polygonal faces 812 and six polygonal vertices 811. The bar shaft 82 is a stud. The connection rod 81 and the bar shaft 82 are threaded and therefore can be meshed with each other.

The clamp device 1 with resilience comprises a clamping portion 10 and a fixing portion 20. The clamping portion 10 is for containing and clamping the connection rod 81. The fixing portion 20 is for receiving and fixing the bar shaft 82 in place. In an embodiment of the present invention, the fixing portion 20 comprises a curved bent arm corresponding in shape to the bar shaft 82. The clamping portion 10 comprises a first clamping plate 11 and a second clamping plate 12. The first and second clamping plates 11, 12 are made of steel or iron and opposite each other to form a space there between for containing and clamping the connection rod 81. In an embodiment of the present invention, when the clamp device 1 with resilience and the slender bar 80 are coupled together, the connection rod 81 draws apart the first clamping plate 11 and the second clamping plate 12 which are made of steel or iron and therefore exhibit resilience such that the connection rod 81 can smoothly enter the containing space formed by the first clamping plate 11 and the second clamping plate 12. After the connection rod 81 has entered the containing space, the first clamping plate 11 and the second clamping plate 12 come into contact with the polygonal faces 812 and clamp the connection rod 81 under a clamping force exerted by the first clamping plate 11 and the second clamping plate 12. In an embodiment of the present invention, the first clamping plate 11 and the second clamping plate 12 are each a resilient plate made of steel, iron, any other metal with appropriate elasticity, or any other substance with appropriate elasticity.

In an embodiment of the present invention, the first clamping plate 11 and the second clamping plate 12 are parallel to each other. The connection rod 81, which is a hex bolt, has three pairs of parallel polygonal faces 812. Therefore, when the connection rod 81 is clamped by the clamp device 1 with resilience according to the present invention, one of the three pairs of polygonal faces 812 of the connection rod 81 come into contact with the first clamping plate 11 and the second clamping plate 12.

When the first clamping plate 11 and the second clamping plate 12 clamp the connection rod 81, a user rotates the connection rod 81 to cause a curved bent arm of the fixing portion 20 to receive and fix the bar shaft 82 in place to thereby keep the bar shaft 82 still but allow the connection rod 81 to rotate. The rotation of the connection rod 81 causes the first clamping plate 11 and the second clamping plate 12 to come into contact with the polygonal vertices 811 of the connection rod 81, and in consequence the first clamping plate 11 and the second clamping plate 12 are drawn apart from each other because of the relatively long distance between the polygonal vertices 811 (which join the diameter of the external circle of the hex bolt), thereby causing the first clamping plate 11 and the second clamping plate 12 to move away from each other. Therefore, the connection rod 81 is rotated by an angle on each instance. The rotation of the connection rod 81 by the angle causes the first clamping plate 11 and the second clamping plate 12 to come into contact with the next pair of polygonal faces 812, and in consequence the clamp device 1 with resilience restores its initial clamping state.

Due to the aforesaid structure, the connection rod 81 must be rotated by a fixed angle. For example, when the connection rod 81 in this embodiment is the hex bolt, the connection rod 81 is rotated by 60 degrees on each instance. According to the present invention, the connection rod 81 is not restricted to a hex bolt; hence, the connection rod 81 can work, provided that it has even-numbered pairs of polygonal faces. For example, the connection rod 81 can be a square bolt (rotated by 90 degrees on each instance), an octagonal bolt (rotated by 45 degrees on each instance), etc.

In an embodiment of the present invention, the fixing portion 20 further comprises a hole 21 penetrable by a thread portion of the connection rod 81 to thereby lengthen the journey of the connection between the connection rod 81 and the bar shaft 82 of the slender bar 80. In another embodiment of the present invention, the fixing portion 20 dispenses with the hole 21 and therefore reduces the amount of adjustment of the journey of the connection rod 81.

In an embodiment of the present invention, two polygonal vertices (at the bottom ends of the first clamping plate 11 and the second clamping plate 12) on one side of the clamping portion 10 can be manufactured to form rounded angles rather than right angles, so as to meet a process need. The clamping portion 10 further comprises a top plate 14 for abutting against and exerting a force upon the connection rod 81 to fix the connection rod 81 in place. If, to meet a process need, two polygonal vertices on one side of the clamping portion 10 are right angles, the top plate 14 will be dispensable such that the connection rod 81 can be fixed in place by allowing the one side of the clamping portion 10 to come into contact with a corresponding one of the polygonal faces 812 of the connection rod 81.

In an embodiment of the present invention, the first clamping plate 11 and the second clamping plate 12 each have a plurality of convolution portions 13. The convolution portions 13 are serrated and have rounded corners to thereby conform with the rise and fall of the polygonal vertices 811 protruding outward as a result of the rotation of the connection rod 81. That said, the present invention is not limited to the aforesaid shape of the convolution portions 13, as the convolution portions 13 can also take on any other appropriate shapes; for example, the convolution portions 13 can be triangularly serrated or squarely serrated.

Although the present invention is disclosed above by embodiments, the embodiments are not restrictive of the present invention. Any persons skilled in the art can make some changes and modifications to the embodiments without departing from the scope of the present invention. Accordingly, the legal protection for the present invention should be defined by the appended claims.

## Claims

1. A clamp device (1) with resilience, for use in clamping a slender bar (80) including a connection rod (81) and a bar shaft (82), with the connection rod (81) being a long polyhedron and including at least a polygonal vertex (811), at least a polygonal face (812) and a thread portion, the clamp device (1) comprising:
a clamping portion (10), comprising:
a first clamping plate (11); and
a second clamping plate (12) opposing the first clamping plate (11), wherein the second clamping plate (12) and the first clamping plate (11) together form a space for containing and clamping the connection rod (81); and
a fixing portion (20) connected to the clamping portion (10) and adapted to receive the bar shaft (82), the fixing portion (20) comprising a hole (21) penetrable by the thread portion **characterized, in that** the fixing portion further comprises a curved bent arm adapted to receive and fix the bar shaft (82), wherein, in the case of the first clamping plate (11) and the second clamping plate (12) clamp the connection rod (81) and the connection rod (81) is rotated, the first clamping plate (11) and the second clamping plate (12) come into contact with the at least a polygonal vertex (811), such that the at least a polygonal vertex (811) draws apart the first clamping plate (11) and the second clamping plate (12), thereby causing the first clamping plate (11) and the second clamping plate (12) to move away from each other and allowing the connection rod (81) to rotate by an angle, and the curved bent arm of the fixing portion (20) is adapted to keep the bar shaft (82) still.

2. The clamp device according to claim 1, wherein the first clamping plate (11) and the second clamping plate (12) are each a resilient plate.

3. The clamp device according to claim 2, wherein the resilient plate is one of a steel resilient plate and an iron resilient plate.

4. The clamp device according to any of the preceding claims, wherein the first clamping plate (11) and the second clamping plate (12) are parallel to each other.

5. The clamp device according to any of the preceding claims, wherein the clamping portion (10) further comprises a top plate (14) for pressing the connection rod (81) to fix the connection rod (81) in place.

6. The clamp device according to any of the preceding claims, wherein the first clamping plate (11) and the second clamping plate (12) each further comprise convolution portions (13) corresponding in position to each other.

7. The clamp device according to claim 6, wherein the convolution portions (13) are serrated and have rounded corners.

## Patentansprüche

1. Klemmenvorrichtung (1) mit Federkraft, zur Anwendung beim Einklemmen einer schlanken Stange (80), die einen Verbindungsstab (81) und einen Stangenschaft (82) beinhaltet, wobei der Verbindungsstab (81) ein langes Polyeder ist und mindestens einen polygonalen Scheitel (811), mindestens eine polygonale Fläche (812) und einen Gewindeabschnitt beinhaltet, wobei die Klemmenvorrichtung (1) umfasst:
einen Klemmabschnitt (10), umfassend:
eine erste Klemmplatte (11); und
eine zweite Klemmplatte (12), die der ersten Klemmplatte (11) gegenüberliegt, wobei die zweite Klemmplatte (12) und die erste Klemmplatte (11) zusammen einen Raum zum Enthalten und Einklemmen des Verbindungsstabs (81) bilden; und
einen Fixierungsabschnitt (20), der mit dem Klemmabschnitt (10) verbunden und dafür ausgelegt ist, den Stangenschaft (82) aufzunehmen, wobei der Fixierungsabschnitt (20) ein Loch (21) umfasst, das von dem Gewindeabschnitt durchdrungen werden kann,
**dadurch gekennzeichnet, dass** der Fixierungsabschnitt weiter einen gekrümmten umgebogenen Arm umfasst, der dafür ausgelegt ist, den Stangenschaft (82) aufzunehmen und zu fixieren, wobei, in dem Fall, dass die erste Klemmplatte (11) und die zweite Klemmplatte (12) den Verbindungsstab (81) einklemmen und der Verbindungsstab (81) rotiert wird, die erste Klemmplatte (11) und die zweite Klemmplatte (12) mit dem mindestens einen polygonalen Scheitel (811) in Kontakt kommen, sodass der mindestens eine polygonale Scheitel (811) die erste Klemmplatte (11) und die zweite Klemmplatte (12) auseinandertreibt, wodurch veranlasst wird, dass sich die erste Klemmplatte (11) und die zweite Klemmplatte (12) auseinanderbewegen, und zugelassen wird, dass der Verbindungsstab (81) um einen Winkel rotiert, und der gekrümmte umgebogene Arm des Fixierungsabschnitts (20) dafür ausgelegt ist, den Stangenschaft (82) stillzuhalten.

2. Klemmenvorrichtung nach Anspruch 1, wobei die erste Klemmplatte (11) und die zweite Klemmplatte (12) jede eine federnde Platte sind.

3. Klemmenvorrichtung nach Anspruch 2, wobei die federnde Platte eine von einer federnden Stahlplatte und einer federnden Eisenplatte ist.

4. Klemmenvorrichtung nach einem der vorhergehenden Ansprüche, wobei die erste Klemmplatte (11) und die zweite Klemmplatte (12) parallel zueinander sind.

5. Klemmenvorrichtung nach einem der vorhergehenden Ansprüche, wobei der Klemmabschnitt (10) weiter eine obere Platte (14) zum Pressen des Verbindungsstabs (81) zur Fixierung des Verbindungsstabs (81) an seinem Platz umfasst.

6. Klemmenvorrichtung nach einem der vorhergehenden Ansprüche, wobei die erste Klemmplatte (11) und die zweite Klemmplatte (12) jede weiter Verschachtelungsabschnitte (13) umfassen, die einander in ihrer Position entsprechen.

7. Klemmenvorrichtung nach Anspruch 6, wobei die Verschachtelungsabschnitte (13) zackenförmig sind und abgerundete Ecken aufweisen.

## Revendications

1. Dispositif de serrage (1) avec résilience, pour son utilisation dans le serrage d'une barre effilée (80) comprenant une tige de raccordement (81) et un arbre de barre (82), la tige de raccordement (81) représentant un long polyèdre et englobant au moins un sommet polygonal (811), au moins une face polygonale (812) et une portion filetée, le dispositif de serrage (1) comprenant :
une première plaque de serrage (11) ; et
une seconde plaque de serrage (12) opposée à la première plaque de serrage (11), dans lequel la seconde plaque de serrage (12) et la première plaque de serrage (11) forment ensemble un espace pour que vienne s'y loger la tige de raccordement (81) pour y être enserrée ; et
une portion de fixation (20) reliée à la portion de serrage (10) et conçue pour la réception de l'arbre de barre (82), la portion de fixation (20) comprenant un trou (21) qui peut être traversé par la portion filetée, **caractérisé en ce que** la portion de fixation comprend en outre un bras courbe incurvé conçu pour la réception et la fixation de l'arbre de barre (82) ; dans lequel, dans le cas où la première plaque de serrage (11) et la seconde plaque de serrage (12) enserrent la tige de raccordement (81) et la tige de raccordement (81) est mise en rotation, la première plaque de serrage (11) et la seconde plaque de serrage (12) entrent en contact avec ledit au moins un sommet polygonal (811), d'une manière telle que ledit au moins un sommet polygonal (811) éloigne par traction la première plaque de serrage (11) par rapport à la seconde plaque de serrage (12), en faisant en sorte que la première plaque de serrage (11) et la seconde plaque de serrage (12) s'écartent l'une de l'autre, ce qui permet la mise en rotation de la tige de raccordement (81) en formant un angle, et le bras courbe incurvé de la portion de fixation (20) étant conçu pour maintenir immobile l'arbre de barre (82).

2. Dispositif de serrage selon la revendication 1, dans lequel la première plaque de serrage (11) et la seconde plaque de serrage (12) représentent chacune une plaque résiliente.

3. Dispositif de serrage selon la revendication 2, dans lequel la plaque résiliente représente une plaque choisie parmi une plaque résiliente en acier et une plaque résiliente en fer.

4. Dispositif de serrage selon l'une quelconque des revendications précédentes, dans lequel la première plaque de serrage (11) et la seconde plaque de serrage (12) sont parallèles l'une par rapport à l'autre.

5. Dispositif de serrage selon l'une quelconque des revendications précédentes, dans lequel la portion de serrage (10) comprend en outre une plaque supérieure (14) pour la compression de la tige de raccordement (81) dans le but de fixer la tige de raccordement (81) en place.

6. Dispositif de serrage selon l'une quelconque des revendications précédentes, dans lequel la première plaque de serrage (11) et la seconde plaque de serrage (12) comprennent chacune en outre des portions (13) présentant une circonvolution dont les positions manifestent une correspondance réciproque.

7. Dispositif de serrage selon la revendication 6, dans lequel les portions (13) présentant une circonvolution sont dentelées et possèdent des coins arrondis.
